(19) Europäisches Patentamt
European Patent Office
Office européen des brevets

(11) EP 2 457 873 B1

(12) # EUROPÄISCHE PATENTSCHRIFT

(45) Veröffentlichungstag und Bekanntmachung des Hinweises auf die Patenterteilung:
**31.10.2018 Patentblatt 2018/44**

(21) Anmeldenummer: **11190507.1**

(22) Anmeldetag: **24.11.2011**

(51) Int Cl.:
***C01G 45/00*** (2006.01) ***C01G 53/00*** (2006.01)
***C01G 51/00*** (2006.01) ***H01M 10/052*** (2010.01)
***H01M 4/485*** (2010.01) ***H01M 4/505*** (2010.01)
***H01M 4/525*** (2010.01) ***H01M 4/62*** (2006.01)

(54) **Verfahren zur Herstellung von Vorstufen für Übergangsmetallmischoxide**

Method for manufacturing precursors for transition metal mixed oxides

Procédé de fabrication d'ébauches pour oxydes mixtes de métal de transition

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2010 EP 10192610**

(43) Veröffentlichungstag der Anmeldung:
**30.05.2012 Patentblatt 2012/22**

(73) Patentinhaber: **BASF SE**
**67056 Ludwigshafen am Rhein (DE)**

(72) Erfinder:
- **Schulz-Dobrick, Martin**
**68165 Mannheim (DE)**
- **Schrödle, Simon**
**86609 Donauwörth (DE)**

(74) Vertreter: **BASF IP Association**
**BASF SE**
**G-FLP-C006**
**67056 Ludwigshafen (DE)**

(56) Entgegenhaltungen:
**EP-A1- 1 351 327**
**WO-A2-2006/023092**
**US-A1- 2009 226 811**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 457 873 B1

## Beschreibung

Die vorliegende Erfindung betrifft ein Verfahren zur Herstellung von Vorstufen für Übergangsmetallmischoxide, dadurch gekennzeichnet, dass man

(A) aus wässriger Lösung bei einem pH-Wert im Bereich von 8,0 bis 9,0 ein Material ausfällt, das die Formel (I)

$$M(CO_3)_bO_c(OH)_dA_mB_e(SO_4)_fX_g(PO_4)_h \qquad (I)$$

aufweist, in der die Variablen wie folgt definiert sind:

M ein oder mehrere Übergangsmetalle
A Natrium oder Kalium,
B ein oder mehrere Metalle der 1. bis 3. Gruppe des Periodensystems, wobei Na und Kalium ausgeschlossen sind,
X Halogenid, Nitrat oder Carboxylat,
b im Bereich von 0,75 bis 0,98,
c im Bereich von null bis 0,50
d im Bereich von null bis 0,50, wobei die Summe (c + d) im Bereich von 0,02 bis 0,50 liegt,
e im Bereich von null bis 0,1,
f im Bereich von null bis 0,05,
g im Bereich von null bis 0,05,
h im Bereich von null bis 0,10,
m im Bereich von 0,002 bis 0,1,

indem man wässrige Lösung von Übergangsmetallsalze(en) in einem oder mehreren Schritten mit wässriger Lösung von einem oder mehreren Alkalimetallcarbonat(en) vereint, wobei das Molverhältnis von Carbonationen zu M im Bereich von 0,7 bis 1,3 liegt,

(B) das ausgefällte Material von der Mutterlauge abtrennt,

wobei die Partikel von Material der allgemeinen Formel (I) eine sphärische Form aufweisen.

Weiterhin betrifft die vorliegende Erfindung Materialien der allgemeinen Formel (I) sowie ihre Verwendung.

Energie zu speichern ist schon seit langer Zeit ein Gegenstand wachsenden Interesses. Elektrochemische Zellen, beispielsweise Batterien oder Akkumulatoren, können zur Speicherung von elektrischer Energie dienen. Besonderes Interesse genießen seit neuerer Zeit die sogenannten Lithium-Ionen-Batterien. Sie sind in einigen technischen Aspekten den herkömmlichen Batterien überlegen. So kann man mit ihnen Spannungen erzeugen, die mit Batterien auf der Grundlage von wässrigen Elektrolyten nicht zugänglich sind.

Dabei spielen die Materialien, aus denen die Elektroden gemacht werden, und dabei insbesondere das Material, aus dem die Kathode gemacht wird, eine wichtige Rolle.

In vielen Fällen verwendet man Lithium-haltige Übergangmetallmischoxide, insbesondere Lithium-haltige Nickel-Kobalt-Mangan-Oxide, die mit einem oder mehreren Übergangsmetallen dotiert sein können. Derartige Lithium-haltige Übergangmetallmischoxide macht man üblicherweise in einem Zweistufenverfahren, wobei man zunächst aus einer oder mehreren Lösungen von Übergangsmetallsalzen eine schwerlösliche Verbindung oder eine Mischung von mehreren schwerlöslichen Verbindungen ausfällt, die man jeweils auch als Vorstufe oder englisch als "Precursor" bezeichnet. Diese Vorstufe wird in einer zweiten Stufe thermisch behandelt, meist im Bereich von 600 bis 1000°C.

Ein Problem vieler Batterien sind jedoch die Zyklenbeständigkeit, die Hochstromfestigkeit und die Energiedichte, die jeweils noch zu verbessern sind.

Durch eigene Beobachtungen konnte gezeigt werden, dass die Wirkung des Elektrodenmaterials von verschiedenen Faktoren abhängt, die mit der Zusammensetzung des Übergangsmetallmischoxids und seiner Morphologie zu tun haben. Dabei beeinflusst das Herstellungsverfahren die Eigenschaften des Elektrodenmaterials, und zwar in vielen Fällen auch das Herstellungsverfahren von Vorstufen.

Aus US 2009/0194746 ist ein Verfahren bekannt, nach dem Nickel-, Mangan- und Kobalthaltige Vorstufen durch Ausfällen von gemischten Carbonaten mit bestimmter Stampfdichte (englisch: tap density), BET-Oberfläche und Partikelgröße erhalten wird. Das Verfahren beruht darauf, dass man mindestens drei verschiedene Lösungen miteinander vermischt: eine Lösung von Übergangsmetallsalzen, beispielsweise den Chloriden, eine Lösung von Metallcarbonaten, insbesondere Alkalimetallcarbonaten, und eine Lösung von Metallsalzen des Anions der Übergangsmetallsalze, also beispielsweise Alkalimetallchlorid. Man erhält Oxid- und Hydroxid-freie sphärische Carbonate von Nickel, Mangan und Kobalt. Nachteilig ist jedoch, dass das zusätzlich eingesetzte Alkalimetallsalz, beispielsweise das Alkalimetallchlorid,

als Abfall anfällt und aufgearbeitet oder entsorgt werden muss.

Aus US 2009/0197173 ist ein Verfahren bekannt, Oxid- und Hydroxid-freie Carbonate von Nickel, Mangan und Kobalt zu machen, die eine hohe BET-Oberfläche aufweisen. Man mischt Lösungen von Nickel-, Kobalt- und Manganchlorid einerseits und Natriumhydrogencarbonat anderseits. Nachteilig ist jedoch die mäßige Löslichkeit von Natriumhydrogencarbonat, so dass man große Volumina an Natriumhydrogencarbonatlösung verarbeiten muss.

Aus US 2006/0121350 ist ein Verfahren bekannt, nach dem man Partikel herstellen kann, die ein Mischung von mehreren Carbonaten von Nickel, Mangan und Kobalt und einem weiteren Carbonat der Formel $DCO_3$ und einem Hydroxid der Formel D(OH) sind. Dazu geht man so vor, dass man Lösungen von Übergangsmetallsalzen und von Salzen von D mit $Li_2CO_3$ versetzt. Nachteilig an diesem Verfahren ist, dass Lithiumcarbonat ziemlich teuer ist und nur durch Aufarbeitung der Mutterlauge zurück gewonnen werden kann.

US 2009/0226811 offenbart ein Verfahren zur Herstellung von Kathodenmaterialien für Lithium-Ionen-Batterien. In diesem Verfahren werden Carbonate von Übergangsmetallen ausgefällt, wobei ein großer Überschuss an Carbonat empfohlen wird. Die Mutterlaugen sind dementsprechend stark salzhaltig, was in vielen Fällen nicht erwünscht ist. WO 2006/023092 offenbart ein Verfahren zur Herstellung von gemischten Carbonaten von Übergangmetallen.

Es bestand also die Aufgabe, ein Verfahren bereit zu stellen, nach dem sich verbesserte Vorstufen für Übergangsmetallmischoxide und Elektrodenmaterialien herstellen lassen. Es bestand weiterhin die Aufgabe, verbesserte Elektroden und verbesserte elektrochemische Zellen bereit zu stellen.

Dementsprechend wurde das eingangs definierte Verfahren gefunden, im Rahmen der vorliegenden Erfindung auch kurz als erfindungsgemäßes Verfahren bezeichnet.

Das erfindungsgemäße Verfahren umfasst mindestens zwei Schritte, kurz Schritte (A) und (B) genannt.

Zur Durchführung von Schritt (A) fällt man aus wässriger Lösung, die einen pH-Wert im Bereich von 8,0 bis 9,0 aufweist, ein Material, das die Formel (I) aufweist,

$$M(CO_3)_bO_c(OH)_dA_mB_e(SO_4)_fX_g(PO_4)_h \qquad (I)$$

der die Variablen wie folgt definiert sind:

M ein oder mehrere Übergangsmetalle, beispielsweise Ni, Mn, Co, Fe, Cu, Zn, Ti, Cr, bevorzugt zwei bis vier Übergangsmetalle, besonders bevorzugt drei Übergangsmetalle, insbesondere Kombinationen von Nickel, Mangan und Kobalt,

A Kalium oder bevorzugt Natrium,

B ein oder mehrere Metalle der 1. bis 3. Gruppe des Periodensystems, wobei Natrium und Kalium ausgeschlossen sind. Zu nennen sind vorzugsweise Cäsium, Rubidium und besonders bevorzugt Lithium, Magnesium, Calcium und Aluminium sowie Mischungen von zwei oder mehr der vorstehend genannten Elemente,

X Halogenid, beispielsweise Bromid, bevorzugt Chlorid, besonders bevorzugt Fluorid, weiterhin Nitrat oder Carboxylat, bevorzugt $C_1$-$C_7$-Carboxylat, insbesondere Benzoat oder Acetat,

b im Bereich von 0,75 bis 0,98,

c im Bereich von null bis 0,50, bevorzugt bis 0,30,

d im Bereich von null bis 0,50, bevorzugt bis 0,30, wobei die Summe (c + d) im Bereich von 0,02 bis 0,50 liegt, bevorzugt bis 0,30,

e im Bereich von null bis 0,1, bevorzugt bis 0,05,

f im Bereich von null bis 0,05,

g im Bereich von null bis 0,05,

h im Bereich von null bis 0,1, bevorzugt bis 0,05,

m im Bereich von 0,002 bis 0,1, bevorzugt bis 0,05,

und wobei die Partikel von Material der allgemeinen Formel (I) eine sphärische Form aufweisen.

in einer Ausführungsform der vorliegenden Erfindung wählt man M aus mindestens zwei Übergangsmetallen, gewählt aus Ni, Mn, Co, Fe, Cu, Zn, Ti und Cr.

In einer Ausführungsform der vorliegenden Erfindung wählt man M aus Ni, Co und Mn.

In einer Ausführungsform der vorliegenden Erfindung sind 55 bis 85 mol-% von M als Mn gewählt, d. h., man wählt M so, dass 55 bis 85 mol-% von M Mangan sind, der Rest ist gewählt aus einem oder mehr anderen Übergangsmetallen, bevorzugt aus Ni, Co, Fe, Cu, Zn, Ti und/oder Cr und besonders bevorzugt als Kombination von Ni und Co.

Material der allgemeinen Formel (I) kann wasserhaltig sein. Unter "wasserhaltig" wird im Rahmen der vorliegenden Erfindung verstanden, dass das Material einen Gehalt von chemisch oder physikalisch gebundenem Wasser im Bereich von 1 bis 50 Gew.-% aufweisen kann, bevorzugt 2 bis 20 Gew.-%. Dabei kann Wasser sowohl in das Kristallgitter des Materials der allgemeinen Formel (I) oder physikalisch an die Partikel gebunden sein. Insbesondere kann auch nach dem Trocknen des Materials, beispielsweise bei bis zu 105°C, noch Wasser enthalten sein. Beispiele für chemisch gebundenes Wasser sind Hydratkomplexe sowie temperaturlabile Hydroxide, die beispielsweise bei Temperaturen im Bereich von 50 bis 300°C an der Luft Wasser abspalten können. Im Rahmen der vorliegenden Erfindung wird jedoch das gegebenenfalls anwesende Wasser in der Formel nicht berücksichtigt.

Zur Durchführung des erfindungsgemäßen Verfahrens geht man von einer wässrigen Lösung aus, die wasserlösliches Salz von Übergangsmetall M oder wasserlösliche Salze von Übergangsmetall(en) M und gegebenenfalls A und B enthält. Eine derartige Lösung wird im Rahmen der vorliegenden Erfindung auch als "wässrige Lösung von Übergangsmetallsalze(en)" bezeichnet. Wasserlösliche Salze von M, insbesondere von Nickel, Kobalt und Mangan, sind beispielsweise Carbonsäuresalze, insbesondere Acetate, von Übergangsmetall M, weiterhin Sulfate, Nitrate, Halogenide, insbesondere Bromide oder Chloride, von Übergangsmetall M, wobei M vorzugsweise in der Oxidationsstufe +2 vorliegt. Eine solche Lösung hat vorzugsweise einen pH-Wert im Bereich von 2 bis 7, besonders bevorzugt im Bereich von 3 bis 6.

Wünscht man ein Material der allgemeinen Formel (I) auszufällen, das mehrere Übergangsmetalle M aufweist, so kann man von einer wässrigen Lösung ausgehen, die zwei oder mehr Gegenionen als Anionen aufweist, beispielsweise indem man eine wässrige Lösung von Kobaltchlorid, Nickelchlorid und Manganacetat einsetzt. In einer anderen Variante setzt man Salze von mehreren Übergangsmetallen mit jeweils gleichen Gegenionen ein.

In einer Ausführungsform der vorliegenden Erfindung kann man von einer wässrigen Lösung von Übergangsmetallsalze(en) ausgehen, die neben Wasser ein oder mehrere organische Lösungsmittel enthält, beispielsweise Ethanol, Methanol oder Isopropanol, beispielsweise bis zu 15 Vol.-%, bezogen auf Wasser. In einer anderen Ausführungsform der vorliegenden Erfindung geht man von einer wässrigen Lösung von Übergangsmetallsalze(en) aus, die weniger als 0,1 Gew.-%, bezogen auf Wasser, oder vorzugsweise kein organisches Lösungsmittel enthält.

In einer Ausführungsform der vorliegenden Erfindung enthält eingesetzte wässrige Lösung von Übergangsmetallsalze(en) Ammoniak, Ammoniumsalz oder ein oder mehrere organische Amine, beispielsweise Methylamin oder Ethylendiamin. Ammoniak oder organische Amine kann man separat zugeben, oder sie können durch Dissoziation von Komplexsalzen von Übergangsmetallsalz in wässriger Lösung gebildet werden. Bevorzugt enthält wässrige Lösung von Übergangsmetallsalze(en) weniger als 10 mol-% Ammoniak oder organisches Amin, bezogen auf Übergangsmetall M. In einer besonders bevorzugten Ausführungsform der vorliegenden Erfindung enthält wässrige Lösung von Übergangsmetallsalze(en) messbare Anteile weder an Ammoniak noch an organischem Amin.

Bevorzugte Ammoniumsalze können beispielsweise Ammoniumsulfat und Ammoniumsulfit sein.

Wässrige Lösung von Übergangsmetallsalz(en) kann eine Gesamtkonzentration von M im Bereich von 0,01 bis 5 mol/kg Lösung aufweisen, bevorzugt sind 1 bis 3 mol/kg Lösung.

In einer Ausführungsform der vorliegenden Erfindung passt man das Molverhältnis von Übergangsmetallen in wässriger Lösung von Übergangsmetallsalze(en) an die gewünschte Stöchiometrie im Kathodenmaterial bzw. Übergangsmetallmischoxid an. Dabei ist gegebenenfalls zu berücksichtigen, dass die Löslichkeiten von verschiedenen Übergangsmetallcarbonaten unterschiedlich sein können.

Wässrige Lösung von Übergangsmetallsalz(en) kann neben den Gegenionen des oder der Übergangsmetallsalze von M ein oder mehrere weitere Salze enthalten. Dabei handelt es sich vorzugsweise um solche Salze, die keine schwerlöslichen Salze mit M bilden, oder um Hydrogencarbonate von beispielsweise Natrium, Kalium, Magnesium oder Calcium, die bei pH-Wert-Änderung zur Ausfällung von Carbonaten Anlass geben können.

In einer anderen Ausführungsform der vorliegenden Erfindung enthält wässrige Lösung von Übergangsmetallsalz(en) nur geringe Anteile an weiteren Chloriden, Acetaten, Nitraten oder Sulfaten, beispielsweise weniger als 5 mol-%, bezogen auf M.

In einer anderen Ausführungsform der vorliegenden Erfindung enthält wässrige Lösung von Übergangsmetallsalz(en) keine weiteren Chloride, Acetate, Nitrate oder Sulfate.

In einer Ausführungsform der vorliegenden Erfindung sind die Variablen f, g und h in Formel (I) dadurch bestimmt, welche Übergangsmetallsalze man in wässriger Lösung von Übergangsmetall(en) einsetzt. So ist es beispielsweise in dem Fall möglich, wenn man lediglich die Sulfate von Mangan, Kobalt, Nickel und gegebenenfalls einem oder mehreren weiteren Übergangsmetallen M zur Bereitung von wässriger Lösung von Übergangmetall(en) eingesetzt hat, dass f

größer ist als null und bis zu 0,05 beträgt, g und h aber null sind.

In einer Ausführungsform der vorliegenden Erfindung kann wässrige Lösung von Übergangsmetallsalz(en) ein oder mehrere Additive enthalten, die gewählt sein können aus Bioziden, Komplexbildnern wie beispielsweise Ammoniak, Chelatbildnern, Reduktionsmitteln, Carbonsäuren und Puffern. In einer anderen Ausführungsform der vorliegenden Erfindung enthält wässrige Lösung von Übergangsmetallsalz(en) keine Additive.

Beispiele für geeignete Reduktionsmittel, die in wässriger Lösung von Übergangsmetallsalz(en) sein können, sind Sulfite, insbesondere Natriumsulfit, Natriumhydrogensulfit, Kaliumsulfit, Kaliumbisulfit, Ammoniumsulfit, weiterhin Hydrazin und Salze von Hydrazin, beispielsweise das Hydrogensulfat, weiterhin wasserlösliche organische Reduktionsmittel wie beispielsweise Ascorbinsäure oder Aldehyde.

Das Ausfällen in Schritt (A) kann man vorzugsweise dadurch bewirken, dass man wässrige Lösung von Übergangsmetallsalze(en) in einem oder mehreren Schritten mit wässriger Lösung von einem oder mehreren Alkalimetallcarbonat(en) vereint, beispielsweise durch Zugabe von Lösung von Alkalimetallcarbonat zu wässriger Lösung von Übergangsmetallsalze(en). Besonders bevorzugte Alkalimetallcarbonate sind Natriumcarbonat und Kaliumcarbonat.

In einer Ausführungsform der vorliegenden Erfindung bewirkt man die Fällung durch Zugabe einer wässrigen Lösung von Natriumcarbonat oder Kaliumcarbonat zu einer wässrigen Lösung von Acetaten, Sulfaten oder Nitraten von Übergangsmetall(en) M.

Wässrige Lösung von Alkalimetallcarbonat kann eine Konzentration von Carbonat im Bereich von 0,1 bis 3 mol/kg aufweisen, bevorzugt ist 1 bis 2,5 mol/kg.

Wässrige Lösung von Alkalimetallcarbonat kann ein oder mehrere weitere Salze enthalten, beispielsweise Ammoniumsalze, insbesondere Ammoniumcarbonat, Ammoniumhydroxid, Ammoniumhydrogencarbonat, Ammoniumsulfat oder Ammoniumsulfit. In einer Ausführungsform kann man ein molares Verhältnis $NH_3$: M von 0,01 bis 0,9, besonders bevorzugt 0,02 bis 0,2 einstellen.

Nachdem man wässrige Lösung von Alkalimetallcarbonat mit wässriger Lösung von Übergangsmetallsalze(en) vereint hat, beispielsweise nach beendeter Zugabe von wässriger Lösung von Alkalimetallcarbonat, weist die vereinigte wässrige Phase einen pH-Wert im Bereich von 8,0 bis 9,0 auf.

In einer anderen Ausführungsform kann man wässrige Lösung von Übergangsmetallsalze(en) mit einer Ammoniak oder Ammoniumsalze enthaltende Lösung vereinen.

Man vereint so viel wässrige Lösung von Alkalimetallcarbonat mit wässriger Lösung von Übergangsmetallsalze(en), dass das Molverhältnis von Carbonationen zu M im Bereich von 0,5 bis 1,3, bevorzugt 0,7 bis 1,3 liegt. Wenn man einen vergleichsweise hohen Überschuss von M aus wässriger Lösung von Übergangsmetallsalze(en) zu Carbonat aus wässriger Lösung von Alkalimetallcarbonat einsetzt, beispielsweise von 1 : 0,5 oder 1 : 0,7, so ist es bevorzugt, außerdem Ammoniak oder Ammoniumcarbonat oder Ammoniumhydrogencarbonat zuzusetzen.

In einer Ausführungsform der vorliegenden Erfindung wählt man für das Ausfällen eine Reaktionszeit im Bereich von 10 Minuten bis 100 Stunden, bevorzugt 10 Stunden bis 60 Stunden. Wünscht man Schritt (A) kontinuierlich durchzuführen, so kann man beispielsweise eine mittlere Verweilzeit im Reaktionsgefäß im Bereich von 10 Minuten bis 20 Stunden wählen, bevorzugt 1 Stunde bis 5 Stunden.

In einer Ausführungsform der vorliegenden Erfindung vermischt man, während man wässrige Lösung von Alkalimetallcarbonat mit wässriger Lösung von Übergangsmetallsalze(en), beispielsweise durch pneumatisches Rühren oder durch Rühren mit einem mechanischen Rührer, beispielsweise einem Paddelrührer, einem Gitterrührer, einem Ankerrührer, einem Impellerrührer, einem Blattrührer oder einem Scheibenrührer.

In einer Ausführungsform der vorliegenden Erfindung kann man einen mittleren mechanischen Leistungseintrag im Bereich von 1 bis 40 W/l, bevorzugt 5 bis 30 W/l bewirken, beispielsweise durch Rühren.

Während der Fällung entsteht eine Suspension mit einem gewissen Feststoffgehalt. Wenn man Schritt (A) kontinuierlich durchführen möchte, so kann man ihn bei einem mittleren Feststoffgehalt im Bereich von 50 bis 750 g/l durchführen.

Die Partikel von Material der allgemeinen Formel (I) weisen eine sphärische Form auf. Darunter soll verstanden werden, dass die Partikel im Wesentlichen kugelförmig sind.

Unter "im Wesentlichen kugelförmig" werden dabei beispielsweise auch solche nicht streng kugelförmigen Partikel subsumiert, beispielsweise ellipsoide Partikel, bei denen die größte Halbachse und die kürzeste Halbachse sich um maximal 10% unterscheiden. Die Morphologie von Material der allgemeinen Formel (I) lässt sich durch Mikroskopie bestimmen, beispielsweise durch Lichtmikroskopie (LMI) oder durch Rasterelektronenmikroskopie (SEM).

Unter "im Wesentlichen kugelförmig" werden dabei auch solche Proben von nicht streng kugelförmigen Partikeln subsumiert, bei denen in einer repräsentativen Probe mindestens 95% (Gewichtsmittel) der Partikel eine im Wesentlichen kugelförmige Gestalt aufweist.

In einer Ausführungsform der vorliegenden Erfindung liegt der Partikeldurchmesser (D50) von Material der allgemeinen Formel (I) im Bereich von 2 bis 50 $\mu$m, bevorzugt im Bereich von 2 bis 25 $\mu$m, besonders bevorzugt im Bereich von 4 bis 20 $\mu$m. Dabei bezeichnet Partikeldurchmesser (D50) im Rahmen der vorliegenden Erfindung den mittleren Partikeldurchmesser (Gewichtsmittel), wie er beispielsweise durch Lichtstreuung ermittelt werden kann.

In einer Ausführungsform der vorliegenden Erfindung kann man Schritt (A) bei Temperaturen im Bereich von 0°C bis 100°C durchführen, bevorzugt sind 35°C bis 75°C.

Schritt (A) kann man bei beliebigem Druck durchführen, so lange wie der Dampfdruck der wässrigen Lösung nicht unterschritten wird. Geeignet sind beispielsweise 1 bis 10 bar, bevorzugt ist Normaldruck.

Schritt (A) des erfindungsgemäßen Verfahrens kann man kontinuierlich oder absatzweise durchführen. Wenn man Schritt (A) des erfindungsgemäßen Verfahrens kontinuierlich durchführen möchte, so kann man Schritt (A) im stationären Zustand (englisch: steady state) oder im nicht-stationären Zustand durchführen, wobei ein stationärer Zustand, auch stationäre Fahrweise genannt, bevorzugt ist.

Schritt (A) des erfindungsgemäßen Verfahrens kann man unter Luft, unter Inertgasatmosphäre, beispielsweise unter Edelgas- oder Stickstoffatmosphäre, oder unter reduzierender Atmosphäre durchführen. Als Beispiele für reduzierende Gase seien beispielsweise CO und $SO_2$ genannt. Bevorzugt arbeitet man unter Inertgasatmosphäre.

In einer Variante des erfindungsgemäßen Verfahrens geht man so vor, dass man

(A') aus wässriger Lösung ein Material ausfällt, das die Formel (I)

$$M(CO_3)_bO_c(OH)_dA_mB_e(SO_4)_fX_g(PO_4)_h \qquad (I)$$

aufweist, in der die Variablen wie folgt definiert sind:

- M ein oder mehrere Übergangsmetalle,
- A Natrium oder Kalium,
- B in oder mehrere Metalle der 1. bis 3. Gruppe des Periodensystems, wobei Natrium und Kalium ausgeschlossen sind,
- X Halogenid, Nitrat oder Carboxylat,
- b im Bereich von 0,75 bis 0,98,
- c im Bereich von null bis 0,50
- d im Bereich von null bis 0,50, wobei die Summe (c + d) im Bereich von 0,02 bis 0,50 liegt,
- e im Bereich von null bis 0,1,
- f im Bereich von null bis 0,05,
- g im Bereich von null bis 0,05,
- h im Bereich von null bis 0,10,
- m im Bereich von 0,002 bis 0,1,

wobei die Gesamtkonzentration der Übergangsmetalle M in der Mutterlauge im Bereich von 50 ppm bis 2.000 ppm liegt, bevorzugt 100 bis 1.000 ppm,

(B) das ausgefällte Material von der Mutterlauge abtrennt,

wobei die Partikel von Material der allgemeinen Formel (I) eine sphärische Form aufweisen.

Das Ausfällen kann man bevorzugt bei einem pH-Wert im Bereich von 7,5 bis 10, bevorzugt von 8,0 bis 9,0 durchführen.

Durch Wahl einer Kombination von Verweilzeit, Molverhältnis von Carbonationen einerseits und Konzentration von M andererseits stellt man die Konzentration der Übergangsmetallen M in der Mutterlauge ein. Darunter ist die Konzentration von noch in Lösung befindlichen Übergangsmetall(en) M zu verstehen, die sich in der Lösung ("Mutterlauge") befinden, sobald das ausgefällte Material abgetrennt wird.

Die übrigen Aspekte der Variante (A') entsprechen Schritt (A).

In Schritt (B) des erfindungsgemäßen Verfahrens trennt man das in Schritt (A) bzw. (A') ausgefällte Material, das die Formel (I) aufweist, von der Mutterlauge ab.

Als Mutterlauge werden dabei Wasser, wasserlösliche Salze sowie gegebenenfalls weitere, sich in Lösung befindliche Additive bezeichnet. Als wasserlösliche Salze kommen beispielsweise Alkalimetallsalze der Gegenionen von Übergangsmetall M in Frage, beispielsweise Natriumacetat, Kaliumacetat, Natriumsulfat, Kaliumsulfat, Natriumnitrat, Kaliumnitrat, Natriumhalogenid, insbesondere Natriumchlorid, Kaliumhalogenid, weiterhin zusätzliche Salze, gegebenenfalls eingesetzte Additive, sowie gegebenenfalls überschüssiges Alkalimetallcarbonat.

Wenn man Schritt (A) bzw. (A') kontinuierlich durchführt, so kann man jeweils einen repräsentativen Anteil der entstandenen Suspension dem Reaktionsgefäß entnehmen, also beispielsweise jeweils ein Aliquot, oder einen nicht repräsentativen Anteil. So ist es beispielsweise möglich, schon bei der Entnahme aus dem Reaktionsgefäß gesondert Mutterlauge abzuziehen. Es ist auch möglich, schon bei der Entnahme aus dem Reaktionsgefäß Partikel von Material der allgemeinen Formel (I) mit bestimmten Partikelgrößen bevorzugt zu entnehmen.

Das Abtrennen kann beispielsweise durch Filtrieren, Zentrifugieren, Dekantieren, Sprühtrocknen oder Sedimentieren erfolgen oder durch eine Kombination von zwei oder mehr der vorstehend genannten Operationen. Als Vorrichtungen sind beispielsweise Filterpressen, Bandfilter, Hydrozyklone, Schrägklärapparate oder Kombination der vorstehend genannten Vorrichtungen geeignet.

An Schritt (B) kann man - insbesondere dann, wenn man das Abtrennen durch Filtration durchführt - einen oder mehrere Waschschritte (C) anschließen. Man kann beispielsweise mit reinem Wasser waschen oder mit einer wässrigen Lösung von Alkalimetallcarbonat oder Alkalimetallhydroxid, insbesondere mit einer wässrigen Lösung von Natriumcarbonat, Kaliumcarbonat, Natriumhydroxid, Kaliumhydroxid, Lithiumhydroxid oder Ammoniak. Wasser ist bevorzugt.

Waschschritt(e) (C) kann beispielsweise unter Anwendung von erhöhtem Druck oder erhöhter Temperatur, beispielsweise 30 bis 50°C, erfolgen. In einer anderen Variante führt man Waschschritt(e) (C) bei Zimmertemperatur durch.

Die Effizienz der Waschschritte kann man durch analytische Maßnahmen überprüfen. So kann man beispielsweise den Gehalt an Übergangsmetall(en) M im Waschwasser analysieren.

Im Falle, dass man mit Wasser statt mit einer wässrigen Lösung von Alkalimetallcarbonat wäscht, kann man mit Hilfe von Leitfähigkeitsuntersuchungen am Waschwasser prüfen, ob noch wasserlösliche Substanzen, beispielsweise wasserlösliche Salze ausgewaschen werden können.

An Schritt (B) kann man einen oder mehrere Trocknungsschritte (D) anschließen. Trocknungsschritt(e) (D) kann man bei Zimmertemperatur oder bei erhöhter Temperatur durchführen. Beispielsweise kann man bei Temperaturen im Bereich von 30 bis 150°C trocknen.

Trocknungsschritt(e) (D) kann man bei Normaldruck oder bei reduziertem Druck durchführen, beispielsweise bei einem Druck im Bereich von 10 mbar bis 500 mbar.

In einer Ausführungsform der vorliegenden Erfindung enthalten nach dem erfindungsgemäßen Verfahren hergestellte Vorstufen auch nach eventuellem Trocknungsschritt (D) oder eventuellen Trocknungsschritten (D) noch physikalisch gebundenes Wasser.

In einer Ausführungsform der vorliegenden Erfindung schließt man nach Schritt (B) einen oder mehrere Waschschritte (C) und gegebenenfalls einen oder mehrere Trocknungsschritte (D) an.

Wassergehalt und Partikeldurchmesser von Vorstufe von Übergangsmetallmischoxid bestimmt man nach Schritt (B), bevorzugt nach Schritt (D).

Nach dem erfindungsgemäßen Verfahren hergestellte Vorstufen eignen sich sehr gut zur Herstellung von Kathoden für Lithium-Ionen-Batterien.

Ein weiterer Gegenstand der vorliegenden Erfindung sind Materialien der allgemeinen Formel (I)

$$M(CO_3)_bO_c(OH)_dA_mB_e(SO_4)_fX_g(PO_4)_h \qquad (I)$$

in partikulärer Form, wobei die Variablen wie folgt definiert sind:

M ein oder mehrere Übergangsmetalle, beispielsweise Ni, Mn, Co, Fe, Cu, Zn, Ti, Cr, bevorzugt zwei bis vier Übergangsmetalle, besonders bevorzugt drei Übergangsmetalle, insbesondere Kombinationen von Nickel, Mangan und Kobalt,

A Kalium oder bevorzugt Natrium,

B ein oder mehrere Metalle der 1. bis 3. Gruppe des Periodensystems, wobei Natrium und Kalium ausgeschlossen sind. Zu nennen sind vorzugsweise Cäsium, Rubidium und besonders bevorzugt Lithium, Magnesium, Calcium und Aluminium sowie Mischungen von zwei oder mehr der vorstehend genannten Elemente,

X Halogenid, beispielsweise Bromid, bevorzugt Chlorid, besonders bevorzugt Fluorid, weiterhin Nitrat oder Carboxylat, bevorzugt $C_1$-$C_7$-Carboxylat, insbesondere Benzoat oder Acetat,

b im Bereich von 0,75 bis 0,98,

c im Bereich von null bis 0,50, bevorzugt bis 0,30,

d im Bereich von null bis 0,50, bevorzugt bis 0,30, wobei die Summe (c + d) im Bereich von 0,02 bis 0,50 liegt, bevorzugt bis 0,30,

e im Bereich von null bis 0,1, bevorzugt bis 0,05,

f im Bereich von null bis 0,05,

g im Bereich von null bis 0,05,

h im Bereich von null bis 0,1, bevorzugt bis 0,05,

m im Bereich von 0,002 bis 0,1, bevorzugt bis 0,05,

die wasserhaltig sein können,
wobei die Partikel von Material der allgemeinen Formel (I) eine sphärische Form aufweisen. Vorstehend charakterisiertes Material wird im Rahmen der vorliegenden Erfindung auch als erfindungsgemäßes Material bezeichnet.

Die Begriffe "wasserhaltig", "Partikel" und "sphärische Form" sind vorstehend erläutert. Die Definitionen sind wie vorstehend.

In einer Ausführungsform der vorliegenden Erfindung sind 55 bis 85 mol-% von M als Mn gewählt, d. h., man wählt M so, dass 55 bis 85 mol-% von M Mangan sind, der Rest ist gewählt aus einem oder mehr anderen Übergangsmetallen, bevorzugt aus Ni, Co, Fe, Cu, Zn, Ti und/oder Cr und besonders bevorzugt als Kombination von Ni und Co.

In einer Ausführungsform der vorliegenden Erfindung liegt der Partikeldurchmesser (D50) von erfindungsgemäßem Material im Bereich von 2 bis 50 $\mu$m, bevorzugt im Bereich von 2 bis 25 $\mu$m, besonders bevorzugt im Bereich von 4 bis 20 $\mu$m. Dabei bezeichnet Partikeldurchmesser (D50) im Rahmen der vorliegenden Erfindung den mittleren Partikeldurchmesser (Gewichtsmittel), wie er beispielsweise durch Lichtstreuung ermittelt werden kann.

Erfindungsgemäße Materialien lassen sich gut zu Übergangmetallmischoxiden verarbeiten, die man zur Herstellung von Elektroden von Lithium-Ionen-Batterien verwenden kann. Ein weiterer Gegenstand der vorliegenden Erfindung ist die Verwendung von erfindungsgemäßen Materialien zur Herstellung von Übergangsmetallmischoxiden. Ein weiterer Gegenstand die ein Verfahren zur Herstellung von Übergangsmetallmischoxiden unter Verwendung von erfindungsgemäßen Materialien.

Zur Herstellung von Übergangsmetallmischoxiden kann man so gehen, dass man eine Mischung von mindestens einem erfindungsgemäßen Material und mindestens einer Lithiumverbindung bei Temperaturen im Bereich von 600 bis 1000°C thermisch behandelt.

Als Lithiumverbindungen sind beispielsweise metallorganische und bevorzugt anorganische Lithiumverbindungen geeignet. Besonders bevorzugte anorganische Lithiumverbindungen sind gewählt aus LiOH, $Li_2CO_3$, $Li_2O$ und $LiNO_3$ sowie entsprechende Hydrate, beispielsweise $LiOH \cdot H_2O$. Zum Vermischen kann man beispielsweise so vorgehen, dass man erfindungsgemäßes Material mit Lithiumverbindung in einem Feststoffmischer vermischt.

In einer Ausführungsform der vorliegenden Erfindung stellt man in der Mischung von erfindungsgemäßem Material und Lithiumverbindung die Stöchiometrie von Übergangsmetallmischoxid ein, und zwar so, dass das molare Verhältnis von Lithium zur Summe der Übergangsmetalle im Bereich von 0,9 bis 1,6, bevorzugt von 1,2 bis 1,5 liegt. In einer anderen Ausführungsform stellt man die Stöchiometrie so ein, dass das molare Verhältnis von Lithium zur Summe der Übergangsmetalle etwa 0,5 beträgt, beispielsweise kann sie im Bereich von 0,4 bis 0,6 liegen.

Erfindungsgemäß hergestellte Übergangsmetallmischoxide sind sehr gut zu verarbeiten, beispielsweise aufgrund ihrer guten Rieselfähigkeit, und zeigen eine sehr gute Zyklenstabilität, wenn man elektrochemische Zellen herstellt unter Verwendung von erfindungsgemäß hergestelltem Übergangsmetallmischoxid.

Zur Herstellung von erfindungsgemäßen Elektroden kann man so vorgehen, dass man Übergangsmetallmischoxid zunächst zu Elektrodenmaterial verarbeitet.

Elektrodenmaterial kann neben Übergangsmetallmischoxid weiterhin Kohlenstoff in elektrisch leitfähiger Modifikation enthalten, beispielsweise als Ruß, Graphit, Graphen, Kohlenstoffnanoröhren oder Aktivkohle.

Elektrodenmaterial kann weiterhin mindestens ein Bindemittel enthalten, beispielsweise ein polymeres Bindemittel.

Geeignete Bindemittel sind vorzugsweise gewählt aus organischen (Co)polymeren. Geeignete (Co)polymere, also Homopolymere oder Copolymere, kann man beispielsweise wählen aus durch anionische, katalytische oder radikalische (Co)polymerisation erhältlichen (Co)polymeren, insbesondere aus Polyethylen, Polyacrylnitril, Polybutadien, Polystyrol, und Copolymeren von mindestens zwei Comonomeren, gewählt aus Ethylen, Propylen, Styrol, (Meth)acrylnitril und 1,3-Butadien. Außerdem ist Polypropylen geeignet. Weiterhin sind Polyisopren und Polyacrylate geeignet. Besonders bevorzugt ist Polyacrylnitril.

Unter Polyacrylnitril werden im Rahmen der vorliegenden Erfindung nicht nur Polyacrylnitril-Homopolymere verstanden, sondern auch Copolymere von Acrylnitril mit 1,3-Butadien oder Styrol. Bevorzugt sind Polyacrylnitril-Homopolymere.

Im Rahmen der vorliegenden Erfindung wird unter Polyethylen nicht nur Homo-Polyethylen verstanden, sondern auch Copolymere des Ethylens, die mindestens 50 mol-% Ethylen einpolymerisiert enthalten und bis zu 50 mol-% von mindestens einem weiteren Comonomer, beispielsweise $\alpha$-Olefine wie Propylen, Butylen (1-Buten), 1-Hexen, 1-Octen,

1-Decen, 1-Dodecen, 1-Penten, weiterhin Isobuten, Vinylaromaten wie beispielsweise Styrol, weiterhin (Meth)acrylsäure, Vinylacetat, Vinylpropionat, $C_1$-$C_{10}$-Alkylester der (Meth)acrylsäure, insbesondere Methylacrylat, Methylmethacrylat, Ethylacrylat, Ethylmethacrylat, n-Butylacrylat, 2-Ethylhexylacrylat, n-Butylmethacrylat, 2-Ethylhexylmethacrylat, weiterhin Maleinsäure, Maleinsäureanhydrid und Itaconsäureanhydrid. Bei Polyethylen kann es sich um HDPE oder um LDPE handeln.

Im Rahmen der vorliegenden Erfindung wird unter Polypropylen nicht nur Homo-Polypropylen verstanden, sondern auch Copolymere des Propylens, die mindestens 50 mol-% Propylen einpolymerisiert enthalten und bis zu 50 mol-% von mindestens einem weiteren Comonomer, beispielsweise Ethylen und α-Olefine wie Butylen, 1-Hexen, 1-Octen, 1-Decen, 1-Dodecen und 1-Penten. Bei Polypropylen handelt es sich vorzugsweise um isotaktisches oder um im Wesentlichen isotaktisches Polypropylen.

Im Rahmen der vorliegenden Erfindung werden unter Polystyrol nicht nur Homopolymere des Styrols verstanden, sondern auch Copolymere mit Acrylnitril, 1,3-Butadien, (Meth)acrylsäure, $C_1$-$C_{10}$-Alkylester der (Meth)acrylsäure, Divinylbenzol, insbesondere 1,3-Divinylbenzol, 1,2-Diphenylethylen und α-Methylstyrol.

Ein anderes bevorzugtes Bindemittel ist Polybutadien.

Andere geeignete Bindemittel sind gewählt aus Polyethylenoxid (PEO), Cellulose, Carboxymethylcellulose, Polyimiden und Polyvinylalkohol.

In einer Ausführungsform der vorliegenden Erfindung wählt man Bindemittel aus solchen (Co)polymeren, die ein mittleres Molekulargewicht $M_w$ im Bereich von 50.000 bis 1.000.000 g/mol, bevorzugt bis 500.000 g/mol aufweisen.

Bei Bindemitteln kann es sich um vernetzte oder unvernetzte (Co)polymere handeln.

In einer besonders bevorzugten Ausführungsform der vorliegenden Erfindung wählt man Bindemittel aus halogenierten (Co)polymeren, insbesondere aus fluorierten (Co)polymeren. Dabei werden unter halogenierten bzw. fluorierten (Co)polymeren solche (Co)polymere verstanden, die mindestens ein (Co)monomer einpolymerisiert enthalten, das mindestens ein Halogenatom bzw. mindestens ein Fluoratom pro Molekül aufweist, bevorzugt mindestens zwei Halogenatome bzw. mindestens zwei Fluoratome pro Molekül.

Beispiele sind Polyvinylchlorid, Polyvinylidenchlorid, Polytetrafluorethylen, Polyvinylidenfluorid (PVdF), Tetrafluoroethylen-Hexafluorpropylen-Copolymere, Vinylidenfluorid-Hexafluorpropylen-Copolymere (PVdF-HFP), Vinylidenfluorid-Tetrafluorethylen-Copolymere, Perfluoralkylvinylether-Copolymere, Ethylen-Tetrafluorethylen-Copolymere, Vinylidenfluorid-Chlortrifluorethylen-Copolymere und Ethylen-Chlorfluorethylen-Copolymere.

Geeignete Bindemittel sind insbesondere Polyvinylalkohol und halogenierte (Co)polymere, beispielsweise Polyvinylchlorid oder Polyvinylidenchlorid, insbesondere fluorierte (Co)polymere wie Polyvinylfluorid und insbesondere Polyvinylidenfluorid und Polytetrafluorethylen.

Elektrisch leitfähiges, kohlenstoffhaltiges Material kann man beispielsweise aus Graphit, Ruß, Kohlenstoffnanoröhren, Graphen oder Mischungen von mindestens zwei der vorstehend genannten Stoffen wählen. Im Rahmen der vorliegenden Erfindung kann elektrisch leitfähiges, kohlenstoffhaltiges Material auch kurz als Kohlenstoff (B) bezeichnet werden.

In einer Ausführungsform der vorliegenden Erfindung handelt es sich bei elektrisch leitfähigem, kohlenstoffhaltigem Material um Ruß. Ruß kann beispielsweise gewählt werden aus Lampenruß, Ofenruß, Flammruß, Thermalruß, Acetylenruß, Industrieruß und Furnace Ruß. Ruß kann Verunreinigungen enthalten, beispielsweise Kohlenwasserstoffe, insbesondere aromatische Kohlenwasserstoffe, oder Sauerstoff-haltige Verbindungen bzw. Sauerstoff-haltige Gruppen wie beispielsweise OH-Gruppen. Weiterhin sind Schwefel- oder Eisen-haltige Verunreinigungen in Ruß möglich.

In einer Variante handelt es sich bei elektrisch leitfähigem, kohlenstoffhaltigem Material um partiell oxidierten Ruß.

In einer Ausführungsform der vorliegenden Erfindung handelt es sich bei elektrisch leitfähigem, kohlenstoffhaltigem Material um Kohlenstoffnanoröhren (englisch carbon nanotubes). Kohlenstoffnanoröhren (Kohlenstoffnanoröhren, kurz CNT oder englisch Carbon nanotubes), beispielsweise einwandige Kohlenstoffnanoröhren (englisch single-walled carbon nanotubes, SW CNT) und bevorzugt mehrwandige Kohlenstoffnanoröhren (englisch multi-walled carbon nanotubes, MW CNT), sind an sich bekannt. Ein Verfahren zu ihrer Herstellung und einige Eigenschaften werden beispielsweise von A. Jess et al. in Chemie Ingenieur Technik 2006, 78, 94 - 100 beschrieben.

In einer Ausführungsform der vorliegenden Erfindung haben Kohlenstoffnanoröhren einen Durchmesser im Bereich von 0,4 bis 50 nm, bevorzugt 1 bis 25 nm.

In einer Ausführungsform der vorliegenden Erfindung haben Kohlenstoffnanoröhren eine Länge im Bereich von 10 nm bis 1 mm, bevorzugt 100 nm bis 500 nm.

Kohlenstoffnanoröhren kann man nach an sich bekannten Verfahren herstellen. Beispielsweise kann man eine flüchtige Kohlenstoff-haltige Verbindung wie beispielsweise Methan oder Kohlenmonoxid, Acetylen oder Ethylen, oder ein Gemisch von flüchtigen Kohlenstoff-haltigen Verbindungen wie beispielsweise Synthesegas in Gegenwart von einem oder mehreren Reduktionsmitteln wie beispielsweise Wasserstoff und/oder einem weiteren Gas wie beispielsweise Stickstoff zersetzen. Ein anderes geeignetes Gasgemisch ist eine Mischung von Kohlenmonoxid mit Ethylen. Geeignete Temperaturen zur Zersetzung liegen beispielsweise im Bereich von 400 bis 1000°C, bevorzugt 500 bis 800°C. Geeignete

Druckbedingungen für die Zersetzung sind beispielsweise im Bereich von Normaldruck bis 100 bar, bevorzugt bis 10 bar.

Ein- oder mehrwandige Kohlenstoffnanoröhren kann man beispielsweise durch Zersetzung von Kohlenstoff-haltigen Verbindungen im Lichtbogen erhalten, und zwar in Anwesenheit bzw. Abwesenheit eines Zersetzungskatalysators.

In einer Ausführungsform führt man die Zersetzung von flüchtiger Kohlenstoff-haltiger Verbindung bzw. Kohlenstoff-haltigen Verbindungen in Gegenwart eines Zersetzungskatalysators durch, beispielsweise Fe, Co oder bevorzugt Ni.

Unter Graphen werden im Rahmen der vorliegenden Erfindung fast ideal oder ideal zweidimensionale hexagonale Kohlenstoffkristalle verstanden, die analog zu einzelnen Graphitschichten aufgebaut sind.

In einer Ausführungsform der vorliegenden Erfindung liegt das Gewichtsverhältnis von erfindungsgemäßem modifiziertem Übergangsmetallmischoxid und elektrisch leitfähigem, kohlenstoffhaltigem Material im Bereich von im Bereich von 200:1 bis 5:1, bevorzugt 100:1 bis 10:1.

Ein weiterer Aspekt der vorliegenden Erfindung ist eine Elektrode, enthaltend mindestens ein wie vorstehend hergestelltes Übergangsmetallmischoxid, mindestens ein elektrisch leitfähiges, kohlenstoffhaltiges Material und mindestens ein Bindemittel.

Übergangsmetallmischoxid und elektrisch leitfähiges, kohlenstoffhaltiges Material sind vorstehend beschrieben.

Ein weiterer Gegenstand der vorliegenden Erfindung sind elektrochemische Zellen, hergestellt unter Verwendung von mindestens einer erfindungsgemäßen Elektrode. Ein weiterer Gegenstand der vorliegenden Erfindung sind elektrochemische Zellen, enthaltend mindestens eine erfindungsgemäße Elektrode.

In einer Ausführungsform der vorliegenden Erfindung enthält erfindungsgemäß hergestelltes Elektrodenmaterial:

im Bereich von 60 bis 98 Gew.-%, bevorzugt 70 bis 96 Gew.-% Übergangsmetallmischoxid,
im Bereich von 1 bis 20 Gew.-%, bevorzugt 2 bis 15 Gew.-% Bindemittel,
im Bereich von 1 bis 25 Gew.-% bevorzugt 2 bis 20 Gew.-% elektrisch leitfähiges, kohlenstoffhaltiges Material.

Die Geometrie von erfindungsgemäßen Elektroden kann man in weiten Grenzen wählen. Bevorzugt ist es, erfindungsgemäße Elektroden in dünnen Filmen auszugestalten, beispielsweise in Filmen mit einer Dicke im Bereich von 10 $\mu$m bis 250 $\mu$m, bevorzugt 20 bis 130 $\mu$m.

In einer Ausführungsform der vorliegenden Erfindung umfassen erfindungsgemäße Elektroden eine Folie, beispielsweise eine Metallfolie, insbesondere eine Aluminiumfolie, oder eine Polymerfolie, beispielsweise eine Polyesterfolie, die unbehandelt oder silikonisiert sein kann.

Ein weiterer Gegenstand der vorliegenden Erfindung ist die Verwendung von erfindungsgemäßen Elektrodenmaterialien bzw. erfindungsgemäßen Elektroden in elektrochemischen Zellen. Ein weiterer Gegenstand der vorliegenden Erfindung ist ein Verfahren zur Herstellung von elektrochemischen Zellen unter Verwendung von erfindungsgemäßem Elektrodenmaterial bzw. von erfindungsgemäßen Elektroden. Ein weiterer Gegenstand der vorliegenden Erfindung sind elektrochemische Zellen, enthaltend mindestens ein erfindungsgemäßes Elektrodenmaterial oder mindestens eine erfindungsgemäße Elektrode.

Erfindungsgemäße Elektroden dienen in erfindungsgemäßen elektrochemischen Zellen definitionsgemäß als Kathoden. Erfindungsgemäße elektrochemische Zellen enthalten eine Gegenelektrode, die im Rahmen der vorliegenden Erfindung als Anode definiert wird und die beispielsweise eine Kohlenstoff-Anode, insbesondere eine Graphit-Anode, eine Lithium-Anode, eine Silizium-Anode oder eine Lithium-Titanat-Anode sein kann.

Bei erfindungsgemäßen elektrochemischen Zellen kann es sich beispielsweise um Batterien oder um Akkumulatoren handeln.

Erfindungsgemäße elektrochemische Zellen können neben Anode und erfindungsgemäßer Elektrode weitere Bestandteile umfassen, beispielsweise Leitsalz, nicht-wässriges Lösungsmittel, Separator, Stromableiter, beispielsweise aus einem Metall oder einer Legierung, weiterhin Kabelverbindungen und Gehäuse.

In einer Ausführungsform der vorliegenden Erfindung enthalten erfindungsgemäße elektrische Zellen mindestens ein nicht-wässriges Lösungsmittel, das bei Zimmertemperatur flüssig oder fest sein kann, bevorzugt gewählt aus Polymeren, cyclischen oder nicht-cyclischen Ethern, cyclischen und nicht-cyclischen Acetalen und cyclischen oder nicht cyclischen organischen Carbonaten.

Beispiele für geeignete Polymere sind insbesondere Polyalkylenglykole, bevorzugt Poly-$C_1$-$C_4$-alkylenglykole und insbesondere Polyethylenglykole. Dabei können Polyethylenglykole bis zu 20 mol-% ein oder mehrere $C_1$-$C_4$-Alkylenglykole einpolymerisiert enthalten. Vorzugsweise handelt es sich bei Polyalkylenglykolen um zweifach mit Methyl oder Ethyl verkappte Polyalkylenglykole.

Das Molekulargewicht $M_w$ von geeigneten Polyalkylenglykolen und insbesondere von geeigneten Polyethylenglykolen kann mindestens 400 g/mol betragen.

Das Molekulargewicht $M_w$ von geeigneten Polyalkylenglykolen und insbesondere von geeigneten Polyethylenglykolen kann bis zu 5.000.000 g/mol betragen, bevorzugt bis zu 2.000.000 g/mol betragen

Beispiele für geeignete nicht-cyclische Ether sind beispielsweise Diisopropylether, Di-n-Butylether, 1,2-Dimethoxyethan, 1,2-Diethoxyethan, bevorzugt ist 1,2-Dimethoxyethan.

Beispiele für geeignete cyclische Ether sind Tetrahydrofuran und 1,4-Dioxan.

Beispiele für geeignete nicht-cyclische Acetale sind beispielsweise Dimethoxymethan, Diethoxymethan, 1,1-Dimethoxyethan und 1,1-Diethoxyethan.

Beispiele für geeignete cyclische Acetale sind 1,3-Dioxan und insbesondere 1,3-Dioxolan.

Beispiele für geeignete nicht-cyclische organische Carbonate sind Dimethylcarbonat, Ethylmethylcarbonat und Diethylcarbonat.

Beispiele für geeignete cyclische organische Carbonate sind Verbindungen der allgemeinen Formeln (II) und (III)

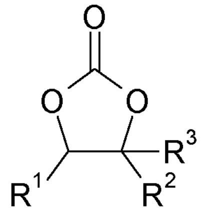

(II)

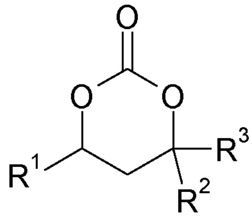

(III)

bei denen $R^1$, $R^2$ und $R^3$ gleich oder verschieden sein können und gewählt aus Wasserstoff und $C_1$-$C_4$-Alkyl, beispielsweise Methyl, Ethyl, n-Propyl, iso-Propyl, n-Butyl, iso-Butyl, sec.-Butyl und tert.-Butyl, wobei vorzugsweise $R^7$ und $R^8$ nicht beide tert.-Butyl sind.

In besonders bevorzugten Ausführungsformen ist $R^1$ Methyl und $R^2$ und $R^3$ sind jeweils Wasserstoff, oder $R^1$, $R^2$ und $R^3$ sind jeweils gleich Wasserstoff.

Ein anderes bevorzugtes cyclisches organisches Carbonat ist Vinylencarbonat, Formel (IV).

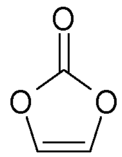

(IV)

Vorzugsweise setzt man das oder die Lösungsmittel im so genannten wasserfreien Zustand ein, d.h. mit einem Wassergehalt im Bereich von 1 ppm bis 0,1 Gew.-%, bestimmbar beispielsweise durch Karl-Fischer-Titration.

Erfindungsgemäße elektrochemische Zellen enthalten weiterhin mindestens ein Leitsalz. Geeignete Leitsalze sind insbesondere Lithiumsalze. Beispiele für geeignete Lithiumsalze sind $LiPF_6$, $LiBF_4$, $LiClO_4$, $LiASF_6$, $LiCF_3SO_3$, $LiC(C_nF_{2n+1}SO_2)_3$, Lithiumimide wie $LiN(C_nF_{2n+1}SO_2)_2$, wobei n eine ganze Zahl im Bereich von 1 bis 20 ist, $LiN(SO_2F)_2$, $Li_2SiF_6$, $LiSbF_6$, $LiAlCl_4$, und Salze der allgemeinen Formel $(C_nF_{2n+1}SO_2)_tYLi$, wobei t wie folgt definiert ist:

t = 1, wenn Y gewählt wird aus Sauerstoff und Schwefel,
t = 2, wenn Y gewählt wird aus Stickstoff und Phosphor, und
t = 3, wenn Y gewählt wird aus Kohlenstoff und Silizium.

Bevorzugte Leitsalze sind gewählt aus $LiC(CF_3SO_2)_3$, $LiN(CF_3SO_2)_2$, $LiPF_e$, $LiBF_4$, $LiClO_4$, und besonders bevorzugt sind $LiPF_6$ und $LiN(CF_3SO_2)_2$.

In einer Ausführungsform der vorliegenden Erfindung enthalten erfindungsgemäße elektrochemische Zellen einen oder mehrere Separatoren, durch die die Elektroden mechanisch getrennt sind. Als Separatoren sind Polymerfilme, insbesondere poröse Polymerfilme, geeignet, die gegenüber metallischem Lithium unreaktiv sind. Besonders geeignete Materialien für Separatoren sind Polyolefine, insbesondere filmförmiges poröses Polyethylen und filmförmiges poröses

Polypropylen.

Separatoren aus Polyolefin, insbesondere aus Polyethylen oder Polypropylen, können eine Porosität im Bereich von 35 bis 45% haben. Geeignete Porendurchmesser liegen beispielsweise im Bereich von 30 bis 500 nm.

In einer anderen Ausführungsform der vorliegenden Erfindung kann man Separatoren aus mit anorganischen Partikeln gefüllten PET-Vliesen wählen. Derartige Separatoren können eine Porosität im Bereich von 40 bis 55 % aufweisen. Geeignete Porendurchmesser liegen beispielsweise im Bereich von 80 bis 750 nm.

Erfindungsgemäße elektrochemische Zellen enthalten weiterhin ein Gehäuse, das beliebige Form haben kann, beispielsweise quaderförmig oder die Form einer zylindrischen Scheibe. In einer Variante wird als Gehäuse eine als Beutel ausgearbeitete Metallfolie eingesetzt.

Erfindungsgemäße elektrochemische Zellen liefern eine hohe Spannung und zeichnen sich aus durch eine hohe Energiedichte und gute Stabilität aus.

Erfindungsgemäße elektrochemische Zellen lassen sich miteinander kombinieren, beispielsweise in Reihenschaltung oder in Parallelschaltung. Reihenschaltung ist bevorzugt.

Ein weiterer Gegenstand der vorliegenden Erfindung ist die Verwendung von erfindungsgemäßen elektrochemischen Zellen in Geräten, insbesondere in mobilen Geräten. Beispiele für mobile Geräte sind Fahrzeuge, beispielsweise Automobile, Zweiräder, Flugzeuge oder Wasserfahrzeuge wie Boote oder Schiffe. Andere Beispiele für mobile Geräte sind solche, die man selber bewegt, beispielsweise Computer, insbesondere Laptops, Telefone oder elektrische Handwerkszeuge, beispielsweise aus dem Bereich des Bauens, insbesondere Bohrmaschinen, Akkubohrschrauber oder Akku-Tacker.

Die Verwendung von erfindungsgemäßen elektrochemischen Zellen in Geräten bietet den Vorteil einer längeren Laufzeit vor dem Nachladen. Wollte man mit elektrochemischen Zellen mit geringerer Energiedichte eine gleiche Laufzeit verwirklichen, so müsste man ein höheres Gewicht für elektrochemische Zellen in Kauf nehmen.

Die Erfindung wird durch Arbeitsbeispiele erläutert.

Mengenangaben von gelösten Salzen beziehen sich auf kg Lösung.

Der Massenanteil von Ni, Co, Mn und Na wurde über induktiv gekoppelte Plasma-Atomemissionsspektroskopie (ICP-AES) bestimmt. Der Massenanteil von $CO_3^{2-}$ wurde bestimmt über Behandlung mit Phosphorsäure und Messung des entstehenden $CO_2$ durch IR-Spektroskopie. Der Massenanteil von $SO_4^{2-}$ wurde mittels Ionenchromatographie bestimmt.

Nur Suspension, welche nach dem Verstreichen von mindestens dem sechsfachen der Verweilzeit TV gewonnen wurde, wurde zur Aufarbeitung bzw. zu analytischen Zwecken eingesetzt.

I. Ausfällung von Materialien der Formel (I.1) bis (I.11)

I.1 Allgemeine Vorschrift für Versuchsreihe 1

Man setzte die folgenden Lösungen an:

Lösung (a.1): Durch Lösen von 0,363 mol/kg Nickelsulfat, 0,198 mol/kg Kobaltsulfat, 1,089 mol/kg Mangan(II)sulfat, 0,025 mol/kg Ammoniumsulfat und 0,03 mol/kg Ammoniumsulfit wurde eine wässrige Lösung von Übergangsmetallsalzen hergestellt. Die Gesamtübergangsmetallkonzentration von Lösung (a.1) betrug 1,650 mol/kg. $\rho_{a.1}$ = 1,3 g/ml

Lösung (b.1): 1,60 mol/kg Natriumcarbonat in Wasser. $\rho_{b.1}$ = 1,2 g/ml

In einer kontinuierlich betriebenen Fällungsapparatur wurde in einem Stickstoffstrom (40 Nl/h) 1,5 l Wasser vorgelegt und bei 55°C unter Rühren (1500 Umdrehungen pro Minute) simultan Lösung (a.1) mit der konstanten Pumprate $PR_{a.1}$ und Lösung (b.1) mit der konstanten Pumprate $PR_{b.1}$ zugepumpt. Dabei fiel entsprechendes Material der Formel (I.1) bis (I.11) aus, und in der Fällungsapparatur bildete sich eine Suspension.

Mit Hilfe eines Überlaufs wurde kontinuierlich so viel Suspension aus der Apparatur entnommen, so dass sich beim Betrieb der Fällungsapparatur in dieser ein in etwa konstantes Volumen an Suspension einstellte. Bei der verwendeten Fällungsapparatur betrug Volumen V 1,6 Liter. Mit Hilfe von V ließ sich die Verweilzeit TV berechnen als $TV = V / (PR_{a.1}/\rho_{a.1}+PR_{b.1}/\rho_{b.1})$ mit $\rho_{a.1}$ und $\rho_{b.1}$ als den Dichten der Lösungen (a.1) bzw. (b.1).

Weitere Aufarbeitung der Suspension

Die Suspension wurde filtriert und der Niederschlag abgetrennt und mit Wasser gewaschen. Der Niederschlag wurde im Trockenschrank bei 105°C über Nacht getrocknet und danach über ein Sieb mit Maschengröße 50 $\mu$m gesiebt.

In der Versuchsreiche 1 wurde die Konzentration von Ammoniumsulfat und $PR_{a.1}$ und $PR_{b.1}$ variiert. Mit steigender $PR_{b.1}$ nahm der pH-Wert zu und die Metallkonzentration in Lösung ab.

Die Konzentrationen von Ni, Co und Mn in den letzten drei Spalten beziehen sich jeweils auf das Filtrat.

Tabelle 1.1: Konzentrationen im Filtrat (Mutterlauge) - Versuchsreihe 1

| Nr. | c[$(NH_4)_2SO_4$] [mol/kg] | $PR_{a.1}$ [g/h] | $PR_{b.1}$ [g/h] | pH-Wert | c[Ni] [ppm] | c[Co] [ppm] | c[Mn] [ppm] |
|---|---|---|---|---|---|---|---|
| I.1 | 0,025 | 285 | 279 | 8,02 | - | - | - |
| I.2 | 0,025 | 285 | 294 | 8,35 | 225 | 30 | 110 |
| I.3 | 0,025 | 285 | 309 | 8,72 | 69 | < 10 | < 10 |
| I.4 | 0,025 | 285 | 323 | 8,95 | 38 | 16 | < 10 |
| I.5 | 0,075 | 285 | 279 | 8,04 | 950 | 165 | 740 |
| I.6 | 0,075 | 285 | 294 | 8,31 | 430 | 43 | 115 |
| I.7 | 0,075 | 285 | 309 | 8,71 | 181 | 16 | 18 |
| I.8 | 0,075 | 285 | 323 | 8,91 | 148 | 21 | < 10 |
| I.9 | 0,150 | 285 | 294 | 8,33 | 850 | 55 | 165 |
| I.10 | 0,150 | 285 | 309 | 8,72 | 440 | 28 | < 10 |
| I.11 | 0,150 | 285 | 323 | 8,98 | 450 | 12 | 10 |

Tabelle 1.2: Zusammensetzung von gefällten Materialien der Formeln (I.1) bis (I.11)

| Nr. | c[Ni] [Gew.-%] | c[Co] [Gew.-%] | c[Mn] [Gew.-%] | c[$CO_3^{2-}$] [Gew.-%] | c[Na] [Gew.-%] | Molverhältnis $CO_3^{2-}$ / (Ni+Co+Mn) |
|---|---|---|---|---|---|---|
| I.1 | 10,8 | 6,0 | 30,0 | 44,0 | 0,22 | 0,88 |
| I.2 | 10,9 | 6,0 | 30,4 | 44,5 | 0,30 | 0,88 |
| I.3 | 10,7 | 5,9 | 30,0 | 44,5 | 0,47 | 0,89 |
| I.4 | 10,9 | 6,0 | 30,5 | 46,5 | 0,55 | 0,92 |
| I.5 | 11,0 | 6,0 | 31,0 | 42,5 | 0,19 | 0,83 |
| I.6 | 10,8 | 5,9 | 30,0 | 43,0 | 0,26 | 0,86 |
| I.7 | 10,9 | 5,8 | 30,0 | 44,0 | 0,42 | 0,88 |
| I.8 | 10,8 | 5,9 | 30,0 | 44,5 | 0,55 | 0,89 |
| I.9 | 10,8 | 5,8 | 30,0 | 43,0 | 0,30 | 0,86 |
| I. 10 | 10,6 | 5,6 | 29,2 | 45,5 | 0,45 | 0,94 |
| I. 11 | 10,6 | 5,7 | 29,5 | 45,0 | 0,52 | 0,90 |

I.2 Vorschrift für Versuch I.12

Man setzte die folgenden Lösungen an:

Lösung (a.2): Durch Lösen von 0,363 mol/kg Nickelsulfat, 0,198 mol/kg Kobaltsulfat und 1,089 mol/kg Mangan(II)sulfat wurde eine wässrige Lösung von Übergangsmetallsalzen hergestellt. Die Gesamtübergangsmetallkonzentration von Lösung (a.2) betrug 1,650 mol/kg.

$$\rho_{a.2} = 1{,}3\ g/ml$$

Lösung (b.2): 1,30 mol/kg Natriumcarbonat und 0,09 mol/kg Ammoniumhydrogencarbonat in Wasser. $\rho_{b.2}$ = 1,15 g/ml

Man ging im Wesentlichen vor wie unter I.1 beschrieben, setzte jedoch die Lösungen (a.2) und (b.2) ein. Die Pumpraten waren $PR_{a.2}$ = 235 g/h und $PR_{b.2}$ = 291 g/h. Mittlere Verweilzeit TV: 3,7 Stunden.

Man erhielt ausgefälltes Material (I.12).

Tabelle 2: Zusammensetzung von Material (I.12)

| c[Ni] | c[Co] | c[Mn] | c[$SO_4^{2-}$] | c[Na] | c[$CO_3^{2-}$] | Molverhältnis $CO_3^{2-}$ / (Ni+Co+Mn) |
|---|---|---|---|---|---|---|
| 10,8 | 5,5 | 31 | 0,08 | 0,38 | 42,0 | 0,83 |
| Dabei bedeutet c stets die Konzentration im Material (I.12) und wird in Gew.-% angegeben. | | | | | | |

I.3 Vorschrift für Versuch I.13

Man setzte die folgende Lösung an:
Lösung (b.3): 1,30 mol/kg Natriumcarbonat und 0,05 mol/kg Ammoniumfluorid und 0,09 mol/kg Ammoniumhydrogencarbonat in Wasser. $\rho_{b.3}$ 1,15 g/ml

Man ging im Wesentlichen vor wie unter I.1 beschrieben, setzte jedoch die Lösungen (a.2) (s. o.) und (b.3) ein. Die Pumpraten waren $PR_{a.2}$ = 235 g/h und $PR_{b.3}$ = 291 g/h. Verweilzeit TV: 3,7 h.

Man erhielt ausgefälltes Material (1.13).

Tabelle 3: Zusammensetzung von Material (I.13):

| c[Ni] | c[Co] | c[Mn] | c[$SO_4^{2-}$] | c[Na] | c[$CO_3^{2-}$] | c[F] | Molverhältnis $CO_3^{2-}$/(Ni+Co+Mn) |
|---|---|---|---|---|---|---|---|
| 10,4 | 5,9 | 30 | 0,10 | 0,33 | 41 | 0,24 | 0,83 |
| Dabei bedeutet c stets die Konzentration des betreffenden Ions im Material (I.13) und wird in Gew.-% angegeben. | | | | | | | |

I.4 Vorschrift für Versuch I.14

Man setzte die folgenden Lösungen an:
Lösung (a.4): Durch Lösen von 0,396 mol/kg Nickelsulfat und 1,254 mol/kg Mangan(II)sulfat wurde eine wässrige Lösung von Übergangsmetallsalzen hergestellt. Die Gesamtübergangsmetallkonzentration von Lösung (a.4) betrug 1,650 mol/kg.

$$\rho_{a.4} = 1{,}3\ g/ml$$

Man ging im Wesentlichen vor wie unter I.1 beschrieben, setzte jedoch die Lösungen (a.4) und (b.2) ein. Die Pumpraten waren $PR_{a.4}$ = 235 g/h und $PR_{b.2}$ = 286 g/h. Mittlere Verweilzeit TV: 3,7 Stunden.

Man erhielt ausgefälltes Material (I.14).

Tabelle 4: Zusammensetzung von Material (I.14)

| c[Ni] | c[Mn] | c[$SO_4^{2-}$] | c[Na] | c[$CO_3^{2-}$] | Molverhältnis $CO_3^{2-}$ / (Ni+Co+Mn) |
|---|---|---|---|---|---|
| 11,8 | 34 | 0,07 | 0,30 | 43,0 | 0,87 |
| Dabei bedeutet c stets die Konzentration des betreffenden Ions im Material (I.14) und wird in Gew.-% angegeben. | | | | | |

II. Herstellung von Übergangsmetallmischoxiden

II.1 Herstellung von Übergangsmetallmischoxid ÜMO.14:

Material (I.14) wurde mit $Li_2CO_3$ gemischt (Molverhältnis Li : Ni : Mn wie 0,5 : 0,25 : 0,75) und in einem Muffelofen bei 900°C für 12 Stunden kalziniert. Dadurch wurde erfindungsgemäßes modifiziertes Übergangsmetallmischoxid ÜMO.14 mit Spinellstruktur aus der modifizierten Vorstufe erhalten.

II.2 Herstellung von Übergangsmetallmischoxid ÜMO.12

Material (I.12) wurde mit $Li_2CO_3$ gemischt (Molverhältnis Li : Ni : Co : Mn wie 1,5 : 0,22 : 0,11 : 0,67) und in einem Muffelofen bei 900°C für 12 Stunden kalziniert. Dadurch wurde erfindungsgemäßes modifiziertes Übergangsmetallmischoxid ÜMO.12 mit Schichtstruktur erhalten.

III. Allgemeine Vorschrift zur Herstellung von Elektroden und Testzellen

Eingesetzte Materialien:

Elektrisch leitfähige, kohlenstoffhaltige Materialien:
Kohlenstoff (C-1): Ruß, BET-Oberfläche von 62 $m^2/g$, kommerziell erhältlich als "Super P Li" der Firma Timcal
Bindemittel (BM.1): Copolymer von Vinylidenfluorid und Hexafluorpropen, als Pulver, kommerziell erhältlich als Kynar Flex® 2801 der Fa. Arkema, Inc.
Angaben in % beziehen sich auf Gewichtsprozent, wenn nicht ausdrücklich anders angegeben.
Zur Bestimmung der elektrochemischen Daten der Materialien wurden 8 g erfindungsgemäßes ÜMO.14, 1 g Kohlenstoff (C-1) und 1 g (BM.1) unter Zusatz von 24 g N-Methylpyrrolidon (NMP) zu einer Paste vermischt. Man beschichtete eine 30 μm dicke Aluminiumfolie mit der vorstehend beschriebenen Paste (Aktivmaterialbeladung 5-7 $mg/cm^2$). Nach Trocknung bei 105°C wurden kreisförmige Teile der so beschichteten Aluminiumfolie (Durchmesser 20 mm) ausgestanzt. Aus den so erhältlichen Elektroden stellte man elektrochemische Zellen her.
Nach Trocknung bei 105°C wurden kreisförmige Elektroden (Durchmesser 20 mm) ausgestanzt und zu Testzellen verbaut. Als Elektrolyt wurde eine 1 mol/l Lösung von $LiPF_6$ in Ethylencarbonat/Dimethylcarbonat (1:1 bezogen auf Massenanteile) eingesetzt. Die Anode der Testzellen bestand aus einer Lithiumfolie, die über einen Separator aus Glasfaserpapier zur Kathodenfolie in Kontakt stand.
Man erhielt erfindungsgemäße elektrochemische Zellen EZ.14.
Die erfindungsgemäßen elektrochemischen Zelle EZ.14 wurde zwischen 4.9 V und 3.5 V bei 25°C in 100 Zyklen zyklisiert (geladen/entladen). Die Lade- und Entladeströme betrug 150 mA/g Kathodenmaterial. Die erfindungsgemäßen elektrochemischen Zellen EZ.14 hatten nach 100 Zyklen eine Entladekapazität von 135 mAh/g.

**Patentansprüche**

**1.** Verfahren zur Herstellung von Vorstufen für Übergangsmetallmischoxide, **dadurch gekennzeichnet, dass** man

(A) aus wässriger Lösung bei einem pH-Wert im Bereich von 8,0 bis 9,0 ein Material ausfällt, das die Formel (I)

$$M(CO_3)_bO_c(OH)_dA_mB_e(SO_4)_fX_g(PO_4)_h \qquad (I)$$

aufweist, in der die Variablen wie folgt definiert sind:

M ein oder mehrere Übergangsmetalle,
A Natrium oder Kalium,
B ein oder mehrere Metalle der 1. bis 3. Gruppe des Periodensystems, wobei Na und Kalium ausgeschlossen sind,
X Halogenid, Nitrat oder Carboxylat,
b im Bereich von 0,75 bis 0,98,
c im Bereich von null bis 0,50
d im Bereich von null bis 0,50,
wobei die Summe (c + d) im Bereich von 0,02 bis 0,50 liegt,
e im Bereich von null bis 0,1,
f im Bereich von null bis 0,05,
g im Bereich von null bis 0,05,
h im Bereich von null bis 0,10,
m im Bereich von 0,002 bis 0,1,

indem man wässrige Lösung von Übergangsmetallsalze(en) in einem oder mehreren Schritten mit wässriger Lösung von einem oder mehreren Alkalimetallcarbonat(en) vereint, wobei das Molverhältnis von Carbonationen zu M im Bereich von 0,7 bis 1,3 liegt,

(B) das ausgefällte Material von der Mutterlauge abtrennt,

wobei die Partikel von Material der allgemeinen Formel (I) eine sphärische Form aufweisen.

2. Verfahren nach Anspruch 1, **dadurch gekennzeichnet, dass** man nach Schritt (B) einen oder mehrere Waschschritte (C) und gegebenenfalls einen oder mehrere Trocknungsschritte (D) anschließt.

3. Verfahren nach Anspruch 1 oder 2, **dadurch gekennzeichnet, dass** man X wählt aus Fluorid.

4. Verfahren nach einem der Ansprüche 1 bis 3, **dadurch gekennzeichnet, dass** man M wählt aus mindestens zwei Übergangsmetallen, gewählt aus Ni, Mn, Co, Fe, Zn, Cr und Ti.

5. Verfahren nach einem der Ansprüche 1 bis 4, **dadurch gekennzeichnet, dass** man B wählt aus Li, Rb, Cs, Mg, Ca, Al und Mischungen von zwei oder mehr der vorstehend genannten Elemente der Hauptgruppen 1 bis 3 des Periodensystems der Elemente.

6. Verfahren nach einem der Ansprüche 1 bis 5, **dadurch gekennzeichnet, dass** der Partikeldurchmesser (D50) im Bereich von 2 bis 50 μm liegt.

7. Verfahren nach einem der Ansprüche 1 bis 6, **dadurch gekennzeichnet, dass** man M wählt aus Ni, Co und Mn.

8. Verfahren nach einem der Ansprüche 1 bis 7, **dadurch gekennzeichnet, dass** 55 bis 85 mol-% von M als Mn gewählt sind.

9. Verfahren nach einem der Ansprüche 1 bis 8, **dadurch gekennzeichnet, dass** man die Fällung bewirkt durch Zugabe einer wässrigen Lösung von Natriumcarbonat oder Kaliumcarbonat zu einer wässrigen Lösung von Acetaten, Sulfaten oder Nitraten von Übergangsmetall(en) M.

10. Verfahren zur Herstellung von Vorstufen für Übergangsmetallmischoxide, **dadurch gekennzeichnet, dass** man

(A') aus wässriger Lösung ein Material ausfällt, das die Formel (I)

$$M(CO_3)_bOc(OH)_dA_mB_e(SO_4)_fX_g(PO_4)_h \qquad (I)$$

aufweist, in der die Variablen wie folgt definiert sind:

M ein oder mehrere Übergangsmetalle,
A Natrium oder Kalium,
B ein oder mehrere Metalle der 1. bis 3. Gruppe des Periodensystems, wobei Na und Kalium ausgeschlossen sind,
X Halogenid, Nitrat oder Carboxylat,
b im Bereich von 0,75 bis 0,98,
c im Bereich von null bis 0,50
d im Bereich von null bis 0,50, wobei die Summe (c + d) im Bereich von 0,02 bis 0,50 liegt,
e im Bereich von null bis 0,1,
f im Bereich von null bis 0,05,
g im Bereich von null bis 0,05,
h im Bereich von null bis 0,10,
m im Bereich von 0,002 bis 0,1,

wobei die Gesamtkonzentration der Übergangsmetalle M in der Mutterlauge im Bereich von 50 ppm bis 2.000 ppm liegt.
(B) das ausgefällte Material von der Mutterlauge abtrennt,

wobei die Partikel von Material der allgemeinen Formel (I) eine sphärische Form aufweisen.

11. Material der allgemeinen Formel (I)

$$M(CO_3)_bO_c(OH)_dA_mB_e(SO_4)_fX_g(PO_4)_h \quad (I)$$

in partikulärer Form, wobei die Variablen wie folgt definiert sind:

M ein oder mehrere Übergangsmetalle
A Natrium oder Kalium,
B ein oder mehrere Metalle der 1. bis 3. Gruppe des Periodensystems, wobei Na und Kalium ausgeschlossen sind,
X Halogenid, Nitrat oder Carboxylat,
b im Bereich von 0,75 bis 0,98,
c im Bereich von null bis 0,50
d im Bereich von null bis 0,50,
wobei die Summe (c + d) im Bereich von 0,02 bis 0,50 liegt,
e im Bereich von null bis 0,1,
f im Bereich von null bis 0,05,
g im Bereich von null bis 0,05,
h im Bereich von null bis 0,10 und
m im Bereich von 0,002 bis 0,1,

das wasserhaltig sein kann,
wobei die Partikel von Material der allgemeinen Formel (I) eine sphärische Form aufweisen.

**12.** Materialien nach Anspruch 11, **dadurch gekennzeichnet, dass** M gewählt ist aus mindestens zwei Übergangsmetallen, gewählt aus Ni, Mn, Co, Fe, Zn, Cr und Ti.

**13.** Materialien nach Anspruch 11 oder 12, **dadurch gekennzeichnet, dass** M gewählt ist aus Ni, Co und Mn.

**14.** Materialien nach einem der Ansprüche 11 bis 13, **dadurch gekennzeichnet, dass** 55 bis 85 mol-% von M als Mn gewählt sind.

**15.** Materialien nach einem der Ansprüche 11 bis 14, **dadurch gekennzeichnet, dass** ihr Partikeldurchmesser (D50) im Bereich von 2 bis 50 μm liegt.

**16.** Materialien nach einem der Ansprüche 11 bis 15, **dadurch gekennzeichnet, dass** B gewählt ist aus Li, Rb, Cs, Mg, Ca, Al und Mischungen von zwei oder mehr der vorstehend genannten Elemente der Hauptgruppen 1 bis 3 des Periodensystems der Elemente.

**17.** Verwendung von Materialien nach einem der Ansprüche 11 bis 16 zur Herstellung von Übergangsmetallmischoxiden.

**18.** Verfahren zur Herstellung von Übergangsmetallmischoxiden, **dadurch gekennzeichnet, dass** man eine Mischung von mindestens einem Material nach einem der Ansprüche 11 bis 16 und mindestens einer Lithiumverbindung bei Temperaturen im Bereich von 600 bis 1000°C thermisch behandelt.

**19.** Übergangsmetallmischoxide, erhältlich nach einem Verfahren nach Anspruch 18.

**20.** Elektrodenformulierung, erhältlich durch Vermischen von mindestens einem Übergangsmetallmischoxid nach Anspruch 19 mit Kohlenstoff in einer elektrisch leitfähigen Form und gegebenenfalls mit mindestens einem polymeren Bindemittel.

**21.** Elektrochemische Zelle, hergestellt unter Verwendung von mindestens einem Elektrodenmaterial nach Anspruch 19 oder mindestens einer Elektrodenformulierung nach Anspruch 20.

## Claims

**1.** A process for preparing precursors for transition metal mixed oxides, wherein

(A) a material having the formula (I)

$$M(CO_3)_bO_c(OH)_dA_mB_e(SO_4)_fX_g(PO_4)_h \qquad (I)$$

where the variables are defined as follows:

M is one or more transition metals,
A is sodium or potassium,
B is one or more metals of groups 1 to 3 of the Periodic Table, excluding Na and potassium,
X is halide, nitrate or carboxylate,
b is in the range from 0.75 to 0.98,
c is in the range from zero to 0.50,
d is in the range from zero to 0.50,
where the sum (c + d) is in the range from 0.02 to 0.50,
e is in the range from zero to 0.1,
f is in the range from zero to 0.05,
g is in the range from zero to 0.05,
h is in the range from zero to 0.10,
m is in the range from 0.002 to 0.1,

is precipitated from aqueous solution at a pH in the range from 8.0 to 9.0 by combining aqueous solution of transition metal salt(s) in one or more steps with aqueous solution of one or more alkali metal carbonate(s), where the molar ratio of carbonate ions to M is in the range from 0.7 to 1.3, and
(B) the precipitated material is separated off from the mother liquor,

where the particles of material of the general formula (I) have a spherical shape.

2. The process according to claim 1, wherein step (B) is followed by one or more washing steps (C) and optionally one or more drying steps (D).

3. The process according to claim 1 or 2, wherein X is fluoride.

4. The process according to any of claims 1 to 3, wherein M is chosen from at least two transition metals selected from among Ni, Mn, Co, Fe, Zn, Cr and Ti.

5. The process according to any of claims 1 to 4, wherein B is selected from among Li, Rb, Cs, Mg, Ca, Al and mixtures of two or more of the abovementioned elements of main groups 1 to 3 of the Periodic Table of the Elements.

6. The process according to any of claims 1 to 5, wherein the particle diameter (D50) is in the range from 2 to 50 $\mu$m.

7. The process according to any of claims 1 to 6, wherein M is selected from among Ni, Co and Mn.

8. The process according to any of claims 1 to 7, wherein from 55 to 85 mol% of M is chosen as Mn.

9. The process according to any of claims 1 to 8, wherein the precipitation is effected by addition of an aqueous solution of sodium carbonate or potassium carbonate to an aqueous solution of acetates, sulfates or nitrates of transition metal(s) M.

10. A process for preparing precursors for transition metal mixed oxides, wherein

(A') a material having the formula (I)

$$M(CO_3)_bO_c(OH)_dA_mB_e(SO_4)_fX_g(PO_4)_h \qquad (I)$$

where the variables are defined as follows:

M is one or more transition metals,
A is sodium or potassium,
B is one or more metals of groups 1 to 3 of the Periodic Table, excluding Na and potassium,

X is halide, nitrate or carboxylate,
b is in the range from 0.75 to 0.98,
c is in the range from zero to 0.50,
d is in the range from zero to 0.50, where the sum (c + d) is in the range from 0.02 to 0.50,
e is in the range from zero to 0.1,
f is in the range from zero to 0.05,
g is in the range from zero to 0.05,
h is in the range from zero to 0.10,
m is in the range from 0.002 to 0.1,

is precipitated from aqueous solution,
where the total concentration of transition metals M in the mother liquor is in the range from 50 ppm to 2000 ppm,
(B) the precipitated material is separated off from the mother liquor,

where the particles of material of the general formula (I) have a spherical shape.

**11.** A material of the general formula (I)

$$M(CO_3)_bO_c(OH)_dA_mB_e(SO_4)_fX_g(PO_4)_h \qquad (I)$$

in particulate form, where the variables are defined as follows:

M is one or more transition metals,
A is sodium or potassium,
B is one or more metals of groups 1 to 3 of the Periodic Table, excluding Na and potassium,
X is halide, nitrate or carboxylate,
b is in the range from 0.75 to 0.98,
c is in the range from zero to 0.50,
d is in the range from zero to 0.50,
where the sum (c + d) is in the range from 0.02 to 0.50,
e is in the range from zero to 0.1,
f is in the range from zero to 0.05,
g is in the range from zero to 0.05,
h is in the range from zero to 0.10 and
m is in the range from 0.002 to 0.1,

which can be water-comprising,
where the particles of material of the general formula (I) have a spherical shape.

**12.** The material according to claim 11, wherein M is chosen from at least two transition metals selected from among Ni, Mn, Co, Fe, Zn, Cr and Ti.

**13.** The material according to claim 11 or 12, wherein M is selected from among Ni, Co and Mn.

**14.** The material according to any of claims 11 to 13, wherein from 55 to 85 mol% of M is chosen as Mn.

**15.** The material according to any of claims 11 to 14, wherein its particle diameter (D50) is in the range from 2 to 50 μm.

**16.** The material according to any of claims 11 to 15, wherein B is selected from among Li, Rb, Cs, Mg, Ca, Al and mixtures of two or more of the abovementioned elements of main groups 1 to 3 of the Periodic Table of the Elements.

**17.** The use of materials according to any of claims 11 to 16 for preparing transition metal mixed oxides.

**18.** A process for preparing transition metal mixed oxides, wherein a mixture of at least one material according to any of claims 11 to 16 and at least one lithium compound is treated thermally at temperatures in the range from 600 to 1000°C.

**19.** A transition metal mixed oxide which can be obtained by a process according to claim 18.

20. An electrode formulation which can be obtained by mixing at least one transition metal mixed oxide according to claim 19 with carbon in an electrically conductive form and optionally with at least one polymeric binder.

21. An electrochemical cell produced using at least one electrode material according to claim 19 or at least one electrode formulation according to claim 20.

**Revendications**

1. Procédé de fabrication de précurseurs pour oxydes mixtes de métaux de transition, **caractérisé en ce que**

(A) un matériau est précipité à partir d'une solution aqueuse à un pH dans la plage allant de 8,0 à 9,0, qui présente la formule (I)

$$M(CO_3)_bO_c(OH)_dA_mB_e(SO_4)_fX_g(PO_4)_h \quad (I)$$

dans laquelle les variables sont définies de la manière suivante :

M un ou plusieurs métaux de transition,
A le sodium ou le potassium,
B un ou plusieurs métaux des groupes 1 à 3 du tableau périodique, Na et le potassium étant exclus,
X un halogénure, un nitrate ou un carboxylate,
b dans la plage allant de 0,75 à 0,98,
c dans la plage allant de zéro à 0,50,
d dans la plage allant de zéro à 0,50,
la somme (c+d) se situant dans la plage allant de 0,02 à 0,50,
e dans la plage allant de zéro à 0,1,
f dans la plage allant de zéro à 0,05,
g dans la plage allant de zéro à 0,05,
h dans la plage allant de zéro à 0,10,
m dans la plage allant de 0,002 à 0,1,

par réunion d'une solution aqueuse d'un ou de plusieurs sels de métaux de transition en une ou plusieurs étapes avec une solution aqueuse d'un ou de plusieurs carbonates de métaux alcalins, le rapport molaire entre les ions carbonate et M se situant dans la plage allant de 0,7 à 1,3,
(B) le matériau précipité est séparé de la liqueur mère,

les particules de matériau de la formule générale (I) présentant une forme sphérique.

2. Procédé selon la revendication 1, **caractérisé en ce que** l'étape (B) est suivie par une ou plusieurs étapes de lavage (C) et éventuellement une ou plusieurs étapes de séchage (D).

3. Procédé selon la revendication 1 ou 2, **caractérisé en ce que** X est choisi parmi un fluorure.

4. Procédé selon l'une quelconque des revendications 1 à 3, **caractérisé en ce que** M est choisi parmi au moins deux métaux de transition, choisis parmi Ni, Mn, Co, Fe, Zn, Cr et Ti.

5. Procédé selon l'une quelconque des revendications 1 à 4, **caractérisé en ce que** B est choisi parmi Li, Rb, Cs, Mg, Ca, Al et les mélanges de deux ou plus des éléments mentionnés précédemment des groupes principaux 1 à 3 du tableau périodique des éléments.

6. Procédé selon l'une quelconque des revendications 1 à 5, **caractérisé en ce que** le diamètre de particule (D50) se situe dans la plage allant de 2 à 50 $\mu$m.

7. Procédé selon l'une quelconque des revendications 1 à 6, **caractérisé en ce que** M est choisi parmi Ni, Co et Mn.

8. Procédé selon l'une quelconque des revendications 1 à 7, **caractérisé en ce que** 55 à 85 % en moles de M est choisi comme Mn.

9. Procédé selon l'une quelconque des revendications 1 à 8, **caractérisé en ce que** la précipitation est effectuée par ajout d'une solution aqueuse de carbonate de sodium ou de carbonate de potassium à une solution aqueuse d'acétates, de sulfates ou de nitrates d'un ou de plusieurs métaux de transition M.

10. Procédé de fabrication de précurseurs pour des oxydes mixtes de métaux de transition, **caractérisé en ce que**

(A') un matériau est précipité à partir d'une solution aqueuse, qui présente la formule (I)

$$M(CO_3)_bO_c(OH)_dA_mB_e(SO_4)_fX_g(PO_4)_h \qquad (I)$$

dans laquelle les variables sont définies de la manière suivante :

M un ou plusieurs métaux de transition,
A le sodium ou le potassium,
B un ou plusieurs métaux des groupes 1 à 3 du tableau périodique, Na et le potassium étant exclus,
X un halogénure, un nitrate ou un carboxylate,
b dans la plage allant de 0,75 à 0,98,
c dans la plage allant de zéro à 0,50,
d dans la plage allant de zéro à 0,50,
la somme (c+d) se situant dans la plage allant de 0,02 à 0,50,
e dans la plage allant de zéro à 0,1,
f dans la plage allant de zéro à 0,05,
g dans la plage allant de zéro à 0,05,
h dans la plage allant de zéro à 0,10,
m dans la plage allant de 0,002 à 0,1,
la concentration des métaux de transition M dans la liqueur mère se situant dans la plage allant de 50 ppm à 2 000 ppm,

(B) le matériau précipité est séparé de la liqueur mère,

les particules de matériau de la formule générale (I) présentant une forme sphérique.

11. Matériau de formule générale (I)

$$M(CO_3)_bO_c(OH)_dA_mB_e(SO_4)_fX_g(PO_4)_h \qquad (I)$$

sous forme particulaire, dans laquelle les variables sont définies de la manière suivante :

M un ou plusieurs métaux de transition,
A le sodium ou le potassium,
B un ou plusieurs métaux des groupes 1 à 3 du tableau périodique, Na et le potassium étant exclus,
X un halogénure, un nitrate ou un carboxylate,
b dans la plage allant de 0,75 à 0,98,
c dans la plage allant de zéro à 0,50,
d dans la plage allant de zéro à 0,50,
la somme (c+d) se situant dans la plage allant de 0,02 à 0,50,
e dans la plage allant de zéro à 0,1,
f dans la plage allant de zéro à 0,05,
g dans la plage allant de zéro à 0,05,
h dans la plage allant de zéro à 0,10 et
m dans la plage allant de 0,002 à 0,1, qui peut contenir de l'eau,
les particules du matériau de formule générale (I) présentant une forme sphérique.

12. Matériaux selon la revendication 11, **caractérisés en ce que** M est choisi parmi au moins deux métaux de transition, choisis parmi Ni, Mn, Co, Fe, Zn, Cr et Ti.

13. Matériaux selon la revendication 11 ou 12, **caractérisés en ce que** M est choisi parmi Ni, Co et Mn.

**14.** Matériaux selon l'une quelconque des revendications 11 à 13, **caractérisés en ce que** 55 à 85 % en moles de M est choisi comme Mn.

**15.** Matériaux selon l'une quelconque des revendications 11 à 14, **caractérisés en ce que** leur diamètre de particule (D50) se situe dans la plage allant de 2 à 50 μm.

**16.** Matériaux selon l'une quelconque des revendications 11 à 15, **caractérisés en ce que** B est choisi parmi Li, Rb, Cs, Mg, Ca, Al et les mélanges de deux ou plus des éléments mentionnés précédemment des groupes principaux 1 à 3 du tableau périodique des éléments.

**17.** Utilisation de matériaux selon l'une quelconque des revendications 11 à 16 pour la fabrication d'oxydes mixtes de métaux de transition.

**18.** Procédé de fabrication d'oxydes mixtes de métaux de transition, **caractérisé en ce qu'**un mélange d'au moins un matériau selon l'une quelconque des revendications 11 à 16 et d'au moins un composé de lithium est traité thermiquement à des températures dans la plage allant de 600 à 1 000 °C.

**19.** Oxydes mixtes de métaux de transition, pouvant être obtenus par un procédé selon la revendication 18.

**20.** Formulation d'électrode, pouvant être obtenue par mélange d'au moins un oxyde mixte de métaux de transition selon la revendication 19 avec du carbone sous une forme électriquement conductrice et éventuellement avec au moins un liant polymère.

**21.** Cellule électrochimique, fabriquée en utilisant au moins un matériau d'électrode selon la revendication 19 ou au moins une formulation d'électrode selon la revendication 20.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20090194746 A
- US 20090197173 A
- US 20060121350 A
- US 20090226811 A
- WO 2006023092 A


### In der Beschreibung aufgeführte Nicht-Patentliteratur


- **A. JESS et al.** *Chemie Ingenieur Technik,* 2006, vol. 78, 94-100